# EUROPÄISCHE PATENTSCHRIFT

(11) **EP 0 634 430 B1**
(45) Veröffentlichungstag und Bekanntmachung des Hinweises auf die Patenterteilung: **28.01.1998**
(21) Anmeldenummer: 94107677.0
(22) Anmeldetag: 18.05.1994
(51) Int. Cl.: C08G 8/00, A01G 5/06

(54) **Verfahren zur Herstellung modifizierter Phenolharz- Schaumstoffe**
Process for preparing foams from modified phenolic resins
Procédé de fabrication de mousses à partir des résines phénoliques modifiées

(30) Priorität: 12.07.1993 DE 4323232
(43) Veröffentlichungstag der Anmeldung: 18.01.1995
(73) Patentinhaber: Bakelite AG, 58642 Iserlohn (DE)
(72) Erfinder: Mirgel, Ralf, Dr., D-53332 Bornheim (DE); Weber, Heinz-Dietmar, D-53844 Troisdorf (DE)

(56) Entgegenhaltungen:
- EP-A- 0 116 128
- DE-A- 2 230 059
- DE-A- 3 144 158
- GB-A- 2 078 221
- GB-A- 2 113 257

## Beschreibung

Die Erfindung betrifft die Herstellung modifizierter, biologisch abbaubarer Schaumstoffe auf der Basis von Phenol-Formaldehyd-Schaumharzen vom Resol-Typ.

Die Verwendung abbaubarer Kunststoffe wird immer mehr zur Forderung erhoben. Es ist bekannt, daß durch Modifizierung von Thermoplasten eine biologische Abbaubarkeit erreicht werden kann. Biologisch abbaubare Duroplaste sind bisher nicht bekannt.

Es ist daher Aufgabe der Erfindung, Schaumstoffe auf Basis von Phenol-Formaldehyd-Schaumharzen zu entwickeln, die eine biologische Abbaubarkeit aufweisen.

Die Lösung der Aufgabe erfolgt durch Verschäumung modifizierter Phenolresole gemäß den Ansprüchen 1 bis 4, entsprechende Schäume, wie in Anspruch 5 beansprucht und ihre Verwendung zur Herstellung von Blumensteckschaum gemäß Anspruch 6

Erfindungsgemäß ist es überraschend möglich, die modifizierenden Zusätze den Ausgangsstoffen der Phenolharzherstellung vor der Kondensation zum Harz, d.h. zu der Mischung aus Phenol und Formaldehyd sowie deren weiteren Bestandteilen zuzugeben, ohne Kondensation und Verschäumung zu beeinträchtigen. Geeignete Zusatzmengen sind 5 bis 50 Gew.-%, bezogen auf Phenole. Die Zusätze behindern nicht die Kondensation der Harze und lassen Schaumkörper in gleicher Qualität ohne die Zusätze entstehen. Die Schaumstoffe mit den Zusätzen verrotten bei Feuchtigkeit und Zutritt von Mikroorganismen. Als Zusätze eignen sich Mono- und Disaccharide, die entsprechenden Zuckeralkohole sowie Harnstoff-Formaldehyd-Kondensationsprodukte, welche in ähnlicher Weise wie Zucker mehrere OH-Gruppen enthalten, d.h. niedermolekulare, wasserlösliche Stoffe, mit mehreren bzw. einer Vielzahl von OH-Gruppen.
Die Kondensation der Phenolharze mit dessen Zusätzen verläuft im Rahmen der üblichen Herstellbedingungen und ohne daß die typischen Kennzahlenbereiche der Schaumharze bzw. der daraus hergestellten Schäume verändert sind.
Der Harzansatz aus Phenol und ggf. Kresol kann in üblicher Weise in den dafür vorgesehenen Mengen Formaldehyd durch Zusatz alkalischer Mittel in der Wärme kondensiert werden, wobei erfindungsgemäß die Zusatzstoffe bereits von Anfang an anwesend sind. Die üblichen basischen Kondensationsmittel wie NaOH, Bariumhydroxid oder Ammoniak können in bekannter Menge verwendet werden. Nach Kondensation des Harzes wird in üblicher Weise mit Säuren neutralisiert und im Vakuum auf Viskositäten von vorzugsweise 2.000 bis 12.000 mPa.s, gemessen bei 20°C entwässert. Analysen ergaben, daß die Zusatzstoffe nach der Kondensation der Harze überraschend nur noch teilsweise in freier Form vorliegen.
Zur Herstellung der Schaumstoffe werden die Harze bei Zimmertemperatur mit einem Treibmittel versetzt, wobei niedrig siedende Treibmittel wie Kohlenwasserstoffe und deren Mischungen mit Siedepunkten zwischen 36 und 80°C entschieden bevorzugt sind. Säurehärter wie Toluol- oder Phenolsulfonsäuren werden zugesetzt sowie Tenside.
Zur Herstellung von im wesentlichen hydrophoben Schaumstoffe werden Tensidmischungen verwendet, die hydrophobierend wirken, während zu den bevorzugten Blumensteckschäumen hydrophile Tensidmischungen Verwendung finden. Solche Blumensteckschäume dienen insbesondere zur Herstellung von Formkörpern für Blumengestecke, jedoch auch zur Herstellung von wasseraufnehmenden Schutzpackungen für den Transport von Blumen.
Die hierfür wichtige Wasseraufnahme soll durch die Wahl der Tenside im Bereich von 80% Wasser, bezogen auf das Volumen des Steckschaums, liegen und die Wasseraufnahmegeschwindigkeit soll groß sein und höchstens wenige Minuten betragen.
Blumensteckschäume werden meistens eingefärbt mit bevorzugt grünen Farbstoffen. Es erwies sich als überraschend vorteilhaft, daß Steckschäume durch die erfindungsgemäßen Zusatzstoffe eine hervorragende Farbbeständigkeit aufweisen.
Die Verschäumung der Schaumharze erfolgt in üblicher Weise bei Temperaturen von 40 bis 60°C in einer beheizbaren Form oder in einer Doppelband-Presse, wobei zugleich die Aushärtung stattfindet.
Kenndaten eines typischen Schaumharzes sind wie folgt:

| | |
|---|---|
| Festharzgehalt | 70 - 84 Gew.-% |
| Viskosität (20°C, Hoeppler) | 2.000 - 10.000 mPa.s |
| Wassergehalt (nach Karl Fischer) | 5 - 20 Gew.-% |
| freies Phenol | 4 - 10 Gew.-% |
| freies Formaldehyd | 0,2 - 3 Gew.-% |
| Harzreaktivität | 100 - 150°C. |

Die Schaumharzreaktivität als Maß für die Härtungsgeschwindigkeit wird durch Messung der maximalen Temperatur nach Zugabe einer bestimmten Menge eines Standardhärters zeitabhängig bestimmt.
Eine typische Verschäumungsrezeptur ist wie folgt:

| | |
|---|---|
| 100 Gew.- Teile | Harz |
| 2 - 8 Gew.- Teile | Tensid-Gemisch |
| 5 - 10 Gew.- Teile | Treibmittel |
| 5 - 15 Gew.- Teile | Härter und |
| 0,5 - 2 Gew.- Teile | Farbstoff. |

Bevorzugt sind Tensid-Gemische aus nicht ionischen Tensiden und anionischen Tensiden im Gewichtsverhältnis 1:5 bis 5:1. Die so hergestellten Blumensteckschaumstoffe liegen in einem Dichtebereich von 15 bis 35 kg/m³.
Es wurde weiter festgestellt, daß so hergestellte Steckschäume auch eine hervorragende Eignung für die erdlose Kultur von Zier- und Nutzpflanzen unter Verwendung von Nährstofflösungen besitzen.
Zur Überprüfung der biologischen Abbaubarkeit der beschriebenen Blumensteckschaumstoffe wurden Versuchsreihen im Institut für Gemüsebau der Technischen Universität Hannover durchgeführt. Der Schaumstoff wurde in unterschiedlichen Verhältnissen mit Kompost gemischt, die Mischungen in Glasgefäße eingebracht und die jeweilige, 24-stündige CO₂-Produktion als Maß für die Abbaubarkeit in bis 3-wöchigen Abständen gemessen. Die gemessenen CO₂-Werte lagen von Anfang an weit über denen, die dem Mischungsverhältnis Kompost zu Schaumstoff entsprechen, was auf eine Zersetzung der duroplastischen Schaumstoffe hindeutet. Die Serie wurde nach 4 Monaten beendet. Bei den aus nicht modifizierten Phenolresolen ohne die erfindungsgemäßen Zusätze hergestellten Steckschäumen war eine Zersetzung durch Mikroorganismen selbst nach einer 6-monatigen Kompostierung nicht erkennbar.

### Beispiele

### Beispiel 1

1.000 Gew.-Teile Phenol, gelöst in 100 Gew.-Teilen Wasser, werden mit 1.294 Gew.-Teilen einer 37 Gew.-%igen wäßrigen Formaldehyd-Lösung, 250 Gew.-Teilen Lactose-Monohydrat und 53 Gew.-Teilen Bariumhydroxid-Octahydrat versetzt. Das Gemisch wird unter Rühren auf 85°C erwärmt und 130 min. bei dieser Temperatur gehalten. Nach der Neutralisation mit 21 Gew.-Teilen einer 25 Gew.-%igen Schwefelsäure wird die wäßrige Harzlösung soweit im Vakuum entwässert, (13 mbar, Sumpftemperatur 60°C), bis die Harzprobe eine Viskosität von 77% aufweist. Die Reaktivität des Harzes liegt bei T_{max.} = 127°C, freier Phenol-Gehalt 9,7 Gew.-%, freier Formaldehyd-Gehalt 1 Gew.-%, freier Lactose-Gehalt 2 Gew.-%.

### Beispiel 2

1.000 Gew.-Teile Phenol, gelöst in 100 Gew.-Teilen Wasser, werden mit 1.294 Gew.-Teilen einer 37 % Gew.-%igen wäßrigen Formaldehyd-Lösung, 715 Gew.-Teilen einer 70 Gew.-%igen wäßrigen Sorbit-Lösung und 70 Gew.-Teilen Bariumhydroxid-Octahydrat versetzt. Das Gemisch wird unter Rühren auf 85°C erwärmt und 85 min. bei dieser Temperatur gehalten. Nach der Neutralisation mit 67 Gew.-%-Teilen einer 25 Gew.-%igen Schwefelsäure wird die wäßrige Harzlösung soweit im Vakuum entwässert, bis die Harzprobe eine Viskosität von 5.400 mPa.s (25°C) bei einem Festharzgehalt von 82% aufweist. Die Reaktivität des Harzes liegt bei T_{max.} = 117°C. Freier Phenol-Gehalt 7,4 Gew.-%, freier Formaldehyd-Gehalt 0,6 Gew.-%, freier Sorbit-Gehalt 9,5 Gew.-%.

### Beispiel 3 (Harz 1)

1.000 Gew.-Teile Phenol, gelöst in 100 Gew.-Teilen Wasser, werden mit 1.294 Gew. Teilen einer 37 Gew.-%igen wäßrigen Formaldehyd-Lösung, 250 Gew.-Teilen GlucoseMonohydrat und 53 Gew.-Teilen Bariumhydroxid-Octahydrat versetzt. Das Gemisch wird unter Rühren auf 85°C erwärmt und 130 min. bei dieser Temperatur gehalten. Nach der Neutralisation mit 21 Gew.-Teilen einer 25 Gew.-%igen Schwefelsäure wird die wäßrige Harzlösung soweit im Vakuum entwässert (13 mbar, Sumpftemperatur 60°C), bis die Harzprobe eine Viskosität von 3.700 mPa.s (20°C nach Hoeppler) bei einem Festharzgehalt von 78% aufweist. Die Reaktivität des Harzes liegt bei T_{max.} =112°C. Freier Phenol-Gehalt 8,9 Gew.-%, freier Formaldehyd-Gehalt 0,7 Gew.-%, freier Glucose-Gehalt 3,2 Gew.-%.

### Beispiel 4 (Harz 2)

536 Gew.-Teile einer 37 Gew.-%igen wäßrigen Formaldehyd-Lösung und 300 Gew.-Teile Harnstoff werden mit 2 Gew.-Teilen einer 25igen Ammoniak-Lösung 15 min. bei 50°C gehalten, durch Zugabe eines Triethyanolamin/Ammoniak-Gemisches (Verhältnis 4:1) zu dem Vorkondensat wird ein pH von 8 eingestellt und nochmals 30 min. bei 50°C belassen. Zu diesem Gemisch werden 545 Gew.-Teile Phenol, gelöst in 55 g Wasser, 706 Gew.-Teile einer 37 Gew.-%igen wäßrigen Formaldehyd-Lösung und 45,2 Gew.-Teile Bariumhydroxid-Octahydrat gegeben und die Gesamtmischung unter Rühren 140 min. bei 85°C gehalten. Nach der Neutralisation mit 30 g einer 25 Gew.-%igen Schwefelsäure wird die Lösung soweit entwässert, daß sie eine Viskosität von 3.600 mPa.s (20°C, Hoeppler) bei einem Festharzgehalt von 78 Gew.-% hat.

### Beispiel 5

200 g Harz 2 werden unter Rühren mit 14 g eines Regulator-Gemisches, bestehend aus ionischen und nicht-ionischen Tensiden, 0,9 g Farbstoff auf Basis eines Triphenylmethan-Derivats, 23 cm³ Petrolether 40/80 und 22,5 ml eines Säurehärters versetzt. Nach 30 sec. Rührzeit wird das Reaktionsgemisch in eine Papiertüte geschüttet und sodann in einen auf 60°C temperierten Wärmeschrank gegeben. Nach 30 min. ist der Härteprozeß beendet. Der Schaumstoff weist folgende Kenndaten auf: Dichte = 25 kg/m³, Wasseraufnahmegeschwindigkeit (Ziegel) 55 sec., Wasseraufnahmevolumen >90 Vol.-%.

### Beispiel 6

200 g Harz 1 werden unter Rühren mit 14 g eines Regulator-Gemisches, bestehend aus ionischen und nicht-inonischen Tensiden, 0,9 g Farbstoff auf Basis eines Triphenylmethan-Derivats, 22 cm³ Petroläther 40/80 und 17,5 cm³ eines Säurehärters versetzt. Nach 30 sec. Rührzeit wird das Reaktionsgemisch in eine Papiertüte geschüttet und sodann in einen 60°C temperierten Wärmeschrank gegeben. Nach 30 min. ist der Härtprozeß beendet. Der Schaumstoff weist folgende Kenndaten auf: Dichte = 25 kg/m³, Wasseraufnahmegeschwindigkeit (Ziegel) 80 sec., Wasseraufnahmevolumen 80 Vol.-%

## Patentansprüche

1. Verfahren zur Herstellung von Schaumstoffen, die als Schaumharz Phenolharz enthalten, dadurch gekennzeichnet, daß als Phenolharz Resol eingesetzt wird, das durch Zusatz von Mono- oder Disacchariden, Zuckeralkoholen oder Harnstoff/Formaldehyd-Kondensationsprodukten zu den Ausgangsstoffen für die Resolharz-Herstellung modifiziert ist.

2. Verfahren nach Anspruch 1, dadurch gekennzeichnet, daß das Resol mit Glucose, Fructose, Lactose oder Sorbit modifiziert ist.

3. Verfahren nach Anspruch 1 oder 2, dadurch gekennzeichnet, daß der Anteil des Modifizierungsmittels 5 bis 50 Gew.%, bezogen auf das Phenol, beträgt.

4. Verfahren nach den Ansprüchen 1 bis 3, dadurch gekennzeichnet, daß die Verschäumung und Aushärtung des Schaumharzes bei Temperaturen im Bereich von 40 bis 60°C in einer Doppelbandpresse erfolgt.

5. Biologisch abbaubarer Schaumstoff, hergestellt nach einem Verfahren gemäß einem oder mehreren der Ansprüche 1 bis 4.

6. Verwendung des biologisch abbaubaren Schaumstoffs gemäß Anspruch 6 zur Herstellung von Blumensteckschaum.

## Claims

1. A process for the production of foamed material, containing phenolic resin as foam resin, charcterized in that as phenolic resin resol is used which is modified by addition of mono- or di-saccharides, sugar alkohols or urea/formaldehyde-condensation products to the starting material for the resol preparation.

2. A process according to claim 1, characterized in that the resol is modified with glucose, fructose, lactose or sorbitol.

3. A process according to claim 1 or 2, characterized in that the amount of modifier is 5 to 50% by weight, based on phenol.

4. A process according to claims 1 to 3, characterized in that the foaming and curing of the foam resin is effected at temperatures in the range of 40 to 60°C in a twin belt press.

5. A biodegradable foamed material produced by a process according to one or several of the claims 1 to 4.

6. Use of the biodegradable foamed material according to claim 5 for the production of foam for the insertion of flowers

## Revendications

1. Procédé pour la fabrication des produits mousses qui contiennent de résine phénolique comme résine mousse, caractérisé en ce que comme résine phénolique résol est utilisé qui est modifié par addition des mono- ou disaccharides, des alkohols de sucre ou des produits de condensation de urea/formaldehyde aux matières brutes pour la production des résoles.

2. Procédé selon la revendication 1, caractérisé en ce que le résol est modifié avec de glucose, fructose, lactose ou sorbite.

3. Procédé selon la revendication 1 ou 2, caractérisé en ce que la quantité de l'agent de modification est 5 à 50 % en poids rapporté au phenol.

4. Procédé selon les revendications 1 à 3, caractérisé en ce que la préparation du mousse et le durcissement du résine mousse a lieu à des températures de 40 à 60°C dans une presse à double bande.

5. Mousse biodégradable, préparée par un procédé selon une ou plusieurs des revendications 1 à 4.

6. Usage du mousse biodégradble selon la revendication 5 comme mousse pour enforcer des fleurs.
